# EUROPEAN PATENT APPLICATION

(11) **EP 4 518 371 A1**
(43) Date of publication of application: **05.03.2025**
(21) Application number: 24197352.8
(22) Date of filing: 29.08.2024
(51) Int. Cl.: H04W 4/38, H04W 84/18

(54) **PASSIVE IOT DEVICE DATA COLLECTION**

(30) Priority: 30.08.2023 GB 202313165
(71) Applicant: Nokia Technologies Oy, 02610 Espoo (FI)
(72) Inventor: BARBU, Oana-Elena, 9220 Aalborg (DK); YANAKIEV, Boyan, 9220 Aalborg (DK); KIILERICH PRATAS, Nuno Manuel, 9220 Aalborg (DK); VEJLGAARD, Benny, 9260 Gistrup (DK)
(74) Representative: Whiting, Gary

(57) **Abstract**

A method, apparatus and computer program are described comprising: receiving, at a first device, configuration information from a control unit, wherein the configuration information comprises a configured state of the first device and a duration for serving as one of a plurality of peer devices; setting the state of the first device to the configured state in response to reception of configuration information from said control unit; monitoring one or more triggers; controlling a change in the state of the first device in response to activation of one or more monitored triggers; and communicating any change of state of the first device to one or more of said peer devices.

## Description

### Field

The present specification relates to supporting activation and reading of devices, such as ambient or passive devices (e.g. Internet of Things (IoT) devices).

### Background

Devices (e.g. passive or ambient devices) are known that can harness energy from an activation signal (e.g. a radio frequency signal) generally provided by a nearby transmitter. Said devices may emit or reflect a signal in response to that activation signal, for example for detection by a reader device in the vicinity of the device. There remains a need for further developments in this field.

### Summary

In a first aspect, this specification describes a first device (e.g. a user equipment of a mobile communication system), the first device comprising: means for receiving configuration information from a control unit (e.g. a session control unit), wherein the configuration information comprises a configured state of the first device and a duration for serving as one of a plurality of peer devices, wherein each of the peer devices has one of a plurality of states, wherein said plurality of states comprise an activation state in which the respective device is configured to transmit an activation signal for activating a second device, a reading state in which the respective device is configured to detect a transmission from said second device in response to said activation signal, an activation eligible state in which the respective device is available to be promoted to the activation state, and a reading eligible state in which the respective device is available to be promoted to the reading state; means for setting the state of the first device to the configured state in response to reception of configuration information from said control unit; means for monitoring one or more triggers; means for controlling a change in the state of the first device in response to activation of one or more monitored triggers; and means for communicating any change of state of the first device to one or more of said peer devices. The second device may be an ambient device or a passive device. The second device may an IoT device (such as an IoT sensor). The configuration information may comprise a list of second devices to be served by the first device.

The one or more triggers may, for example, include an explicit request defining a new required state for the first device. Moreover, the means for controlling the change in the state of the first device may prioritise explicit requests over other triggers.

In some example embodiments, said one or more triggers comprises an indication from one of the peer devices that the respective peer device is being demoted from an activation state to an activation eligible state. In response to said demotion, the means for controlling the change in the state of the first device may be configured to promote the first device to the activation state in the event that the first device is in the activation eligible state.

In some example embodiments, said one or more triggers comprise an indication from one of the peer devices that the respective peer device is being demoted from a reading state to a reading eligible state. In response to said demotion, the means for controlling the change in the state of the first device may be configured to promote the first device to the reading state in the event that the first device is in the reading eligible state.

In some example embodiments, said one or more triggers include a requirement for the first device to perform a higher priority task, in response to which the first device may cease to serve as one of said plurality of peer devices.

In some example embodiments, said one or more triggers include the expiry of the duration for serving as one of said plurality of peer devices, in response to which the first device may cease to serve as one of said plurality of peer devices.

In some example embodiments, said one more triggers include a mobility regime change. In response to said mobility regime change the means for controlling the change in the state of the first device may be configured to change the state to the activation eligible state in the event that the first device is in the activation state and/or to change the state to the reading eligible state in the event that the first device is in the reading state.

In some example embodiments, said one or more triggers include detecting that an activation signal is being transmitted by a different one of said peer devices, in response to which the means for controlling the change in the state of the first device may be configured to promote the first device to the reading state in the event that the first device is in the reading eligible state.

The configuration information may comprise a list of second devices to be served by the first device.

The said plurality of states may comprise a relay state. In some example embodiments, said one more triggers include a mobility regime change, in response to which the means for controlling the change in the state of the first device is configured to change the state to the relay state in the event that the first device is in the activation ready state or the reading ready state.

In a second aspect, this specification describes a system comprising one or more first devices as described herein (including devices of the first aspect described above) and one or more of said second devices (e.g. passive or ambient device(s)). The system may further comprise the control unit (which may be a session control unit).

In a third aspect, this specification describes a method comprising: receiving, at a first device, configuration information (e.g. a list of second devices to be served by the first device) from a control unit (e.g. a session control unit), wherein the configuration information comprises a configured state of the first device and a duration for serving as one of a plurality of peer devices, wherein each of the peer devices has one of a plurality of states, wherein said plurality of states comprise an activation state in which the respective device is configured to transmit an activation signal for activating a second device (e.g. an ambient device or a passive device), a reading state in which the respective device is configured to detect a transmission from said second device in response to said activation signal, an activation eligible state in which the respective device is available to be promoted to the activation state, and a reading eligible state in which the respective device is available to be promoted to the reading state; setting the state of the first device to the configured state in response to reception of configuration information from said control unit; monitoring one or more triggers; controlling a change in the state of the first device in response to activation of one or more monitored triggers; and communicating any change of state of the first device to one or more of said peer devices.

The first device may be any first device as described herein (including a first device of the first aspect). The second device may be an ambient device or a passive device. The second device may an IoT device (such as an IoT sensor).

The one or more triggers may include an explicit request defining a new required state for the first device. Controlling changes in the state of the first device may, for example, prioritise explicit requests over other triggers.

The one or more triggers may comprise an indication from one of the peer devices that the respective peer device is being demoted from an activation state to an activation eligible state. In response to said demotion, the method may further comprise controlling the change in the state of the first device to promote the device to the activation state in the event that the first device is in the activation eligible state.

The one or more triggers may comprise an indication from one of the peer devices that the respective peer device is being demoted from a reading state to a reading eligible state. In response to said demotion, the method may comprises controlling the change in the state of the first device to promote the device to the reading state in the event that the first device is in the reading eligible state.

The one or more triggers may include a requirement for the first device to perform a higher priority task, in response to which the first device may cease to serve as one of said plurality of peer devices.

The one or more triggers may include the expiry of the duration for serving as one of said plurality of peer devices, in response to which the first device may cease to serve as one of said plurality of peer devices.

The one more triggers may include a mobility regime change, in response to which controlling the change in the state of the first device may comprise changing the state to the activation eligible state in the event that the first device is in the activation state and/or changing the state to the reading eligible state in the event that the first device is in the reading state.

The one or more triggers may include detecting that an activation signal is being transmitted by a different one of said peer devices, in response to which controlling the change in the state of the first device may comprise promoting the first device to the reading state in the event that the first device is in the reading eligible state.

In some example embodiments, said plurality of states include a relay state.

The said plurality of states may comprise a relay state. In some example embodiments, said one more triggers include a mobility regime change, in response to controlling the change in the state of the first device may comprise changing the state to the relay state in the event that the first device is in the activation ready state or the reading ready state.

In a fourth aspect, this specification describes computer-readable instructions which, when executed by a computing apparatus, cause the computing apparatus to perform (at least) any method as described herein (including the method of the third aspect described above).

In a fifth aspect, this specification describes a computer-readable medium (such as a non-transitory computer-readable medium) comprising program instructions stored thereon for performing (at least) any method as described herein (including the method of the third aspect described above).

In a sixth aspect, this specification describes an apparatus comprising: at least one processor; and at least one memory including computer program code which, when executed by the at least one processor, causes the apparatus to perform (at least) any method as described herein (including the method of the third aspect described above).

In a seventh aspect, this specification describes an apparatus comprising: at least one processor; and at least one memory storing instructions that, when executed by the at least one processor, causes the apparatus to perform (at least) any method as described herein (including the method of the third aspect described above).

In an eighth aspect, this specification describes a computer program comprising instructions which, when executed by a first device, cause the first device to: receive configuration information (e.g. a list of second devices to be served by the first device) from a control unit (e.g. a session control unit), wherein the configuration information comprises a configured state of the first device and a duration for serving as one of a plurality of peer devices, wherein each of the peer devices has one of a plurality of states, wherein said plurality of states comprise an activation state in which the respective device is configured to transmit an activation signal for activating a second device (e.g. an ambient device or a passive device, such as an ambient IoT device), a reading state in which the respective device is configured to detect a transmission from said second device in response to said activation signal, an activation eligible state in which the respective device is available to be promoted to the activation state, and a reading eligible state in which the respective device is available to be promoted to the reading state; set the state of the first device to the configured state in response to reception of configuration information from said control unit; monitor one or more triggers; control a change in the state of the first device in response to activation of one or more monitored triggers; and communicate any change of state of the first device to one or more of said peer devices.

In a ninth aspect, this specification describes: an input of a first device (or some other means) for receiving configuration information (e.g. a list of second devices to be served by the first device) from a control unit (e.g. a session control unit), wherein the configuration information comprises a configured state of the first device and a duration for serving as one of a plurality of peer devices, wherein each of the peer devices has one of a plurality of states, wherein said plurality of states comprise an activation state in which the respective device is configured to transmit an activation signal for activating a second device (e.g. an ambient device or a passive device), a reading state in which the respective device is configured to detect a transmission from said second device in response to said activation signal, an activation eligible state in which the respective device is available to be promoted to the activation state, and a reading eligible state in which the respective device is available to be promoted to the reading state; a control module (or some other means) for setting the state of the first device to the configured state in response to reception of configuration information from said control unit; the control module (or some other means) for monitoring one or more triggers; the control module (or some other means) for controlling a change in the state of the first device in response to activation of one or more monitored triggers; and an output (or some other means) for communicating any change of state of the first device to one or more of said peer devices.

### Brief description of the drawings

Example embodiments will now be described, by way of non-limiting examples, with reference to the following schematic drawings, in which:
FIG. 1 is a block diagram showing a system in accordance with an example embodiment;
FIG. 2 is a flowchart showing an algorithm in accordance with an example embodiment;
FIG. 3 is a block diagram showing a system in accordance with an example embodiment;
FIG. 4 is a block diagram showing a system in accordance with an example embodiment;
FIGS. 5 and 6 are flowcharts showing algorithms in accordance with example embodiments;
FIG. 7 shows a message flow sequence in accordance with an example embodiment;
FIGS. 8 to 10 are flowcharts showing algorithms in accordance with example embodiments;
FIG. 11 is a schematic diagram of components of one or more of the example embodiments described previously; and
FIG. 12 shows tangible media for storing computer-readable code which when run by a computer may perform methods according to example embodiments described herein.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

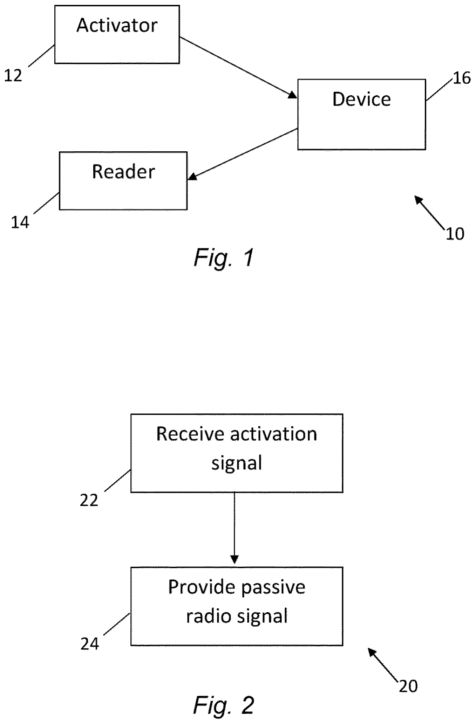

FIG. 1 is a block diagram showing a system, indicated generally by the reference numeral 10, in accordance with an example embodiment. The system 10 comprises an activator 12, a reader 14 and a device 16. The device 16 may be an ambient (or passive) radio device. The device 16 may be an Internet of Things (IoT) device or some other sensor.

The device 16 harnesses energy from wireless signals (e.g. radio frequency signals) sent on specific carriers and/or bandwidths and charges a simple circuit that, once activated, will emit or reflect a passive signal. The passive signal may, for example, encode at least an identifier (ID) of the ambient device.

In the system 10, the activator 12 sends an activation signal targeted at waking up the device 16. The reader 14 is a device that listens for and detects passive radio signals. The reader 14 may or may not be collocated with the activator 16.

The device 16 may be an ambient/passive device without energy storage (type A device), an ambient/passive device with energy storage, such as a battery (type B device), or an active device with energy storage.

FIG. 2 is a flowchart showing an algorithm, indicated generally by the reference numeral 20, in accordance with an example embodiment. The algorithm 20 may be implemented at the device 16 described above.

The algorithm 20 starts at operation 22, where an activation signal is received. The activation signal may, for example, be transmitted by the activator 12 and received by the device 16. As noted above, the activation signal may charge a circuit at the relevant device.

At operation 24, a passive radio signal is provided in response to the activation signal. The passive radio signal may, for example, be provided (e.g. reflected) by the device 16 and intended to be detected by the reader 14.

Internet of Things (IoT) devices are typically low cost, low power devices. Reducing the cost and power levels of such devices further would enable such devices to be deployed in more applications and in potentially greater numbers. For example, lower power devices may enable such IoT devices to be used in applications requiring batteryless devices.

The number of IoT connections has been growing rapidly in recent years and may be in the hundreds of billions by 2030. With more and more 'things' expected to be interconnected for improving production efficiency and increasing comforts of life, demands for further reduction of size, cost, and power consumption for IoT devices can be expected. In particular, regular replacement of batteries for all the IoT devices is impractical due to the tremendous consumption of materials and manpower.

Using cellular technologies, such as 3GPP technologies, in the system 10 may be attractive. However, cellular devices usually consume tens or even hundreds of milliwatts power for transceiver processing, which is beyond the power capabilities of many typical energy harvesters. Often, it is impractical to power cellular devices directly by energy harvesting.

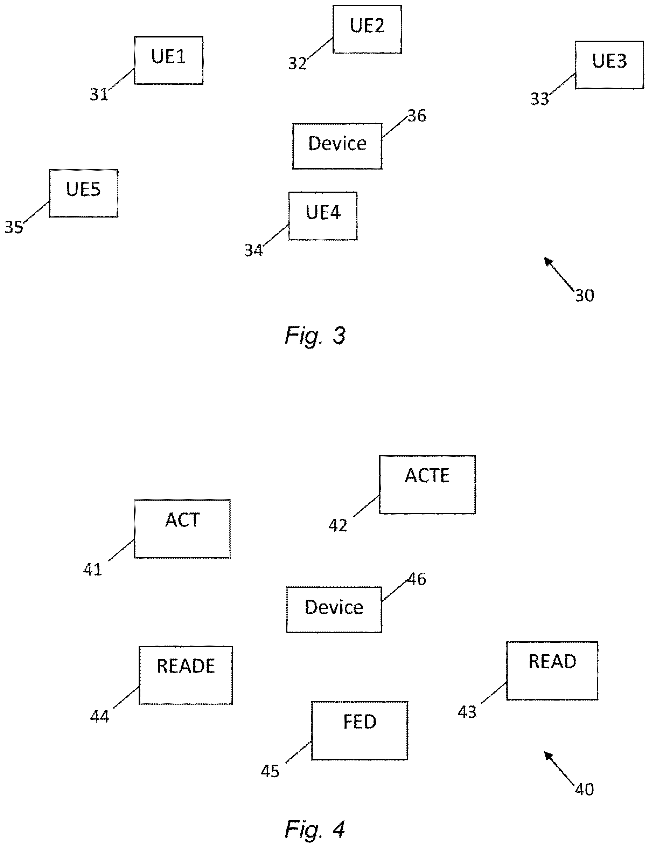

FIG. 3 is a block diagram showing a system, indicated generally by the reference numeral 30, in accordance with an example embodiment. The system 30 comprises first to fifth user devices 31 to 35 and a second device 36 (e.g. an ambient or passive device). The first to fifth user devices may be user equipments (UEs) of a mobile communication system. The second device 36 may be similar to the device 16 described above.

In an example use of the system 30, one of the user devices 31 to 35 may be used an activator (e.g. as the activator 12 of the system 10 described above) and one of the user devices 31 to 35 may be used as a reader (e.g. as the reader 14 of the system 10). Although different devices are often used as the activator and the reader this is not essential; the same user device could perform both roles.

There may be a number of constraints on the use of the system 30, some of which are discussed below.

The system 30 may be dynamic; in particular some or all of the user devices 31 to 35 may be mobile. Moreover, the second device 36 may be mobile (such a device may, for example, be tag attached to a device or object that it being tracked).

In use, the user device being used as the activator typically needs to be in the immediate proximity of the second device 36, such that the second device 36 receives sufficient energy to power on and initiate its subsequent transmission. In one example embodiment, the second device 36 should be no more than 20 metres away from the activator (although this distance will vary in different example implementations). It may be difficult to control to system 30 to ensure that a suitable activator is enabled, especially if both the second device 36 and potential activators are moving.

Similarly, the user device being used as the reader typically needs to be close to the second device 36. In one example embodiment, for a successful reading, the reader should be at most be 300 metres away from the device 36 (although this distance will vary in different example implementations). Again, the reader user device may be moving.

Moreover, even if the activator and reader user devices are sufficiently close to the second device 36, one or more of those devices may be busy with other tasks (e.g. communication or positioning), and may therefore be temporarily unavailable to serve in the second device 36.

Finally, the second device 36 typically cannot monitor any link parameters (as a UE would do in legacy radio systems e.g., for handover, beam realignment, etc.). Thus, the second device 36 may not be able to proactively trigger a change in the configuration of the system.

Under these constraints, a control unit for the system 30 (which may be implemented as a network node, such as a gNB or a location management function (LMF)) may anticipate whether a current activator and reader pair remains valid (are available and still sufficiently close to the second device) from one reading to the next. If not, the control unit seek to find new elements (e.g. other user device) to take over and then reconfigure future reading such that the second device 36 remains reachable.

FIG. 4 is a block diagram showing a system, indicated generally by the reference numeral 40, in accordance with an example embodiment. The system 40 comprises first to fifth user devices 41 to 45 and an ambient or passive device 46 (or some other "second device"). The first to fifth user devices 41 to 45 may be user equipments (UEs) of a mobile communication system and may be similar to the first to fifth devices 31 to 35 described above. The device 46 may be similar to the device 16 or the device 36 described above.

As described in detail below, the first to fifth user devices 41 to 45 have different roles in the system 40; moreover, those devices can transition between different roles (e.g. in response to changing system requirements). The devices may, for example, transition opportunistically between roles (in defined circumstances).

Each of the first to fifth user devices 41 to 45 is referred to herein as a "full ambient IoT support device" (FSD) and can act as a "parent" of the device 46 (which may be an ambient or passive IoT device).

In one example embodiment, the following types of FSD are defined:
- Activation device (ACT), which performs a transmission of an activation signal. An ACT device may be an RRC connected or RRC inactive UE.
- Reading device (READ), which can detect a transmission from an ambient or passive device. A READ device may be an RRC connected or RRC inactive UE.
- Activation Eligible End device (ACTE), which can be promoted to an ACT device. An ACTE device may, for example, be RRC connected or inactive.
- Reading Eligible End device (READE), which can be promoted to a READ device. A READE device may, for example, be RRC connected or inactive.
- Full End Device (FED), which cannot, in some example embodiments, be self-promoted to another FSD device type. A FED can transfer configuration/control messages among other FSD devices (as can any of the other FSD types) and may be referred to a relay. A FED may, for example, be RRC connected or inactive. Note that some example embodiments may not include any FEDs.

In the example configuration shown in FIG. 4, the first to fifth user devices 41 to 46 have been assigned roles. Specifically, the first user device 41 is an activation device (ACT), the second user device 42 is an activation eligible end device (ACTE), the third user device 43 is a reading device (READ), the fourth user device 44 is a reading eligible end device (READE), and the fifth user device 45 is a full end device (FED)

The device 46 is a device that when interrogated by an ACT parent (i.e. the first device 41 in the configuration shown in the system 40), sends data to a READ parent (i.e. the third device 43 in the system 40). Note that devices of type A (passive device without energy storage) and type B (passive device with energy storage) can only operate as the "child" device 46, while device of type C (active device with energy storage) can operate as an ACT, ACTE, READ or READE parent devices (such as the first to fourth devices 41 to 44 in the system 40).

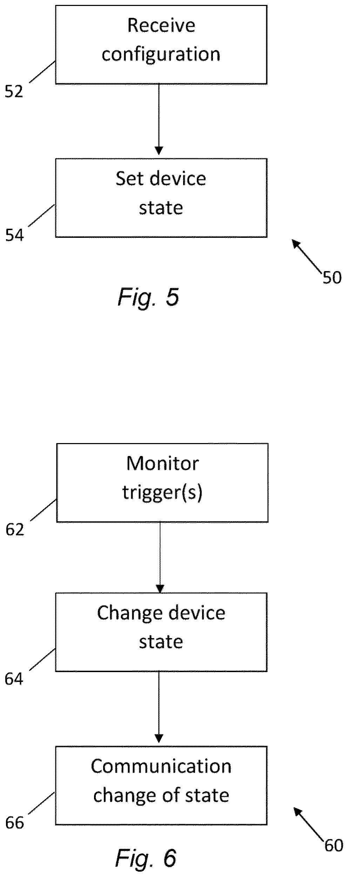

FIG. 5 is a flowchart showing an algorithm, indicated generally by the reference numeral 50, in accordance with an example embodiment. The algorithm 50 may be implemented at a user device, such as one of the first to fifth user devices 41 to 45 of the system 40 described above (although the algorithm 50 could be implemented elsewhere, such as at a network node of a communication system).

The algorithm 50 starts at operation 52, where configuration information is received. For example, configuration information may be received at a user device from a control unit, such as a session control unit as discussed further below. The control unit may, for example, be provided as part of a network node of a mobile communication system, alternatively the control unit could be provided as part of a UE. The configuration information received in the operation 52 may comprise a configured state of the device and a duration for serving as one of a plurality of peer devices. For example, the operation 52 may be received at one of the first to fifth user devices 41 to 45, with the other of those devices being "peer devices" with respect to that user device.

The configuration information indicates the state that the device should operate in. As discussed above, the states may include an activation state in which the respective device is configured to transmit an activation signal for activating an ambient device (e.g. an IoT device), a reading state in which the respective device is configured to detect a transmission from said ambient device in response to said activation signal, an activation eligible state in which the respective device is available to be promoted to the activation state, and a reading eligible state in which the respective device is available to be promoted to the reading state. The states may additionally include a relay state.

At operation 54, the state of the respective user device is set to the configured state in response to reception of configuration information received (from the control unit) in the operation 52.

Further information may be included in the configuration information. For example, the configuration information may include a list of ambient devices (such as the device 46) to be served by the device. In some example embodiments, the list could be empty (e.g. if the ambient device(s) in question are unknown) or could be estimated. Accordingly, in some example embodiments, unlisted devices can still be supported by the user device. In some example embodiments, the list may be omitted entirely.

FIG. 6 is a flowchart showing an algorithm, indicated generally by the reference numeral 60, in accordance with an example embodiment. The algorithm 60 may be implemented at any of the first to fifth user devices 41 to 45 described above (or any similar user device - sometimes referred to herein generally as a "first device").

The algorithm starts at operation 62, where the respective user device monitors for one or more triggers. The triggers may take many different forms (some example triggers are discussed below).

At operation 64, the state of the device is changed in response to activation of one or more monitored triggers. For example, a user device may be promoted (e.g. from an ACTE state to an ACT state, or from a READE state to a READ state) or demoted (e.g. from an ACT state to an ACTE state, a READ state to a READE state, or from an ACTE or READE state to a FED state).

Finally, at operation 66, a change of state of the device is communicated to one or more (e.g. all) of said peer devices. By way of example, the communication may be by broadcasting, multicasting or unicasting. The communication may, for example, make use of sidelink communications between user devices.

Example triggers that may be monitored in the operation 62 include:
- An explicit request defining a new required state for the device. (Note that, in some example embodiments, explicit requests are prioritised over other triggers.)
- An indication from one of the peer devices that the respective peer device is being demoted from an activation state to an activation eligible state, in response to which the means for controlling the change in the state of the device is configured to promote the device to the activation state in the event that the device is in the activation eligible state. Note that there may be pre-conditions that need to be fulfilled before the promotion occurs. For example, in some example embodiments, promotion may happen only if a timer has not expired and/or no other higher priority traffic is scheduled and/or the UE mobility is not too high.
- An indication from one of the peer devices that the respective peer device is being demoted from a reading state to a reading eligible state, in response to which the means for controlling the change in the state of the device is configured to promote the device to the reading state in the event that the device is in the reading eligible state. Again, there may be pre-conditions that need to be fulfilled before the promotion occurs. For example, in some example embodiments, promotion may happen only if a timer has not expired and/or no other higher priority traffic is scheduled and/or the UE mobility is not too high.
- A requirement for the device to perform a higher priority task (such as a user device being required to perform a data transfer), in response to which the device ceases to serve as one of said plurality of peer devices.
- The expiry of the duration (e.g. as indicated by a timer) for serving as one of said plurality of peer devices, in response to which the device ceases to serve as one of said plurality of peer devices.
- A mobility regime change, in response to which the state is changed to the activation eligible state (in the event that the device is in the activation state) and the state is changed to the reading eligible state (in the event that the device is in the reading state).
- A mobility regime change, in response to which the state of the device is changed to the relay state in the event that the device is in the activation ready state or the reading ready state.
- Detecting that an activation signal is being transmitted, in response to which state of the device may be changed by promoting the device to the reading state in the event that the device is in the reading eligible state. In this option, the user device may be configured to act opportunistically.

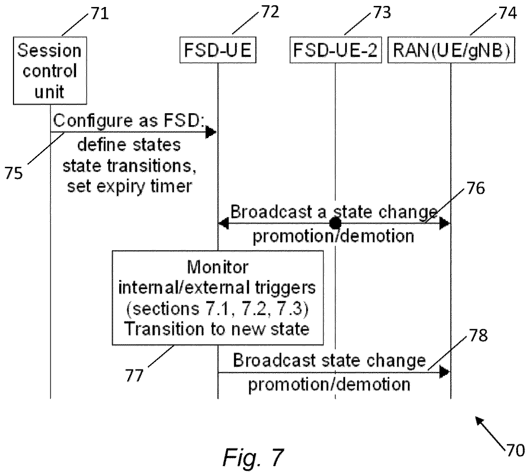

FIG. 7 shows a message flow sequence, indicated generally by the reference numeral 70, in accordance with an example embodiment. The message sequence 70 shows messages between a session control unit 71 (or some other controller), a first user device 72, a second user device 74 and a radio access node (RAN) 74. The first and second user devices may be UEs of a mobile communication system. The RAN could be implemented by a UE, a gNB or some other network node.

In the message sequence 70, the first FSD 72 is configured as a full ambient IoT support device (FSD) by the session control unit (SCU) 71. The SCU 71 may reside in the user device itself, in another coordinating user device, or in the network. When configuration is complete, the first FSD user device 72 serves the respective ambient devices until its timer expires. The serving may mean taking any of the roles defined in the previous section, either proactively or reactively as detailed herein.

The message sequence 70 starts with a configuration message 75 being sent from the SCU 71 to the first user device 72.

This message 75 may include:
- A request for the user device to serve as a full support device (FSD).
- A duration for serving as an FSD.
- An initial FSD state (e.g. ACT, ACTE, READ, READE, FED).
- A list of devices (e.g. IoT devices) to be served. The list may, for example, include one or more of: device IDs, device types (e.g. types A, B or C), configuration information relating to device activation signals, etc.. Note that this may be omitted in some example embodiments, or the list may be empty, partial or suggestive (e.g. an estimate).

If the SCU 71 is the relevant gNB, then the configuration may be implemented using downlink (DL) RRC or MAC CE. If the SCU 71 is in another UE, the configuration may be implemented using sidelink (SL) PSCH or other non-3GPP technologies, such as WLAN for UEs.

In addition to receiving configuration messages (such as the message 75), the first user device 72 may receive state change messages from peer user devices. In the example message sequence 70, the first user device 72 received a state change broadcasted by the second user device 73 (message 76).

After the configuration instructed by the message 75 is complete, the first user device 72 starts performing the role it has been assigned (as indicated by the operation 77). In the operation 77, the first user device 72 monitors intrinsic and extrinsic timers and/or triggers that may determine the device to change its current role.

In the event of a trigger (in operation 77) resulting in a change in the state of the first user device 72, a state change 78 is broadcast (thereby implementing operation 66 of the algorithm 60 described above). This message may be issued by an FSD device whenever the state of that device changes as a result of an intrinsic trigger or an extrinsic stimulus. The message may be sent via sidelinks in a broadcast manner, multicast, or even unicast if the FSD user device knows the IDs of other FSD devices. Finally, a non-3GPP methods can be used for broadcasting state change messages.

In example embodiments, a user device (such as a New Radio (NR) user equipment (UE)) can transition between FSD roles as a result of one or more of:
- An explicit request (REQ). For example, when the user device receives an explicit configuration for a new function either from the NR network itself, or from a FED. This trigger may have the highest priority and, if multiple trigger types are simultaneously generated or received, it will be used first.
- An Event in which the ambient device undergoes a change (EVT-E). The change may be a demotion or a promotion. An example of a demotion would be where a UE is in either an ACT state or a READ state and needs to leave the session prior to its completion. The UE may need to serve more urgent traffic or may switch to a high mobility regime and become thus unsuitable for Ambient IoT FSD. In this case, the UE broadcasts its self-demotion. An example of a promotion would be where a UE is in an ACTE state or a read state READE and an ACT or READ device broadcasts a self-demotion e.g., it releases itself from all functions and there is no preconfigured replacement, or when it becomes a FED. Such a release from function may occur when the UE may need to perform higher priority functions e.g., Uu communication, positioning, etc. This trigger may have the second highest priority.
- An event where an internal timer has lapsed (EVT-I). The timer may log the involvement of the device in the Ambient IoT system. For example, the UE may be requested to actively serve (be ACT/ACTE/READ/READE) in the session for a duration T1, may be required to serve passively (as FED) in the session for a duration T2. This trigger may have the third highest priority.
- A wakeup (WKP) trigger. Assuming an inactive LPWUS receiver present (or active but with priority on Ambient IoT) a change of state can be triggered opportunistically based on ACT signal detection so that a READE can self-promote to READ for a started ACT session. The availability of the WKP trigger can be controlled by a variety of ways - for example explicit configuration by the NR network for a READE device in an area to enable the LPWUS receiver, or if completely independent operation is desired an always on low-power wake-up signal (LPMUS) receiver can only produce a WKP trigger above a certain preconfigured power threshold. This trigger may have the fourth highest priority.

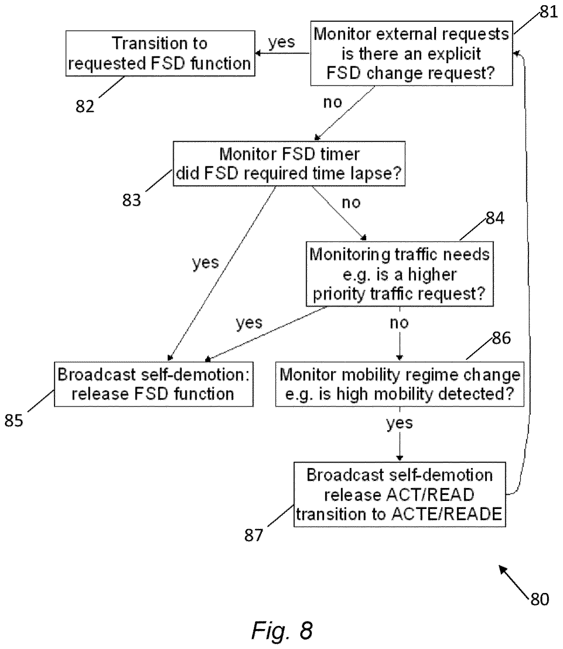

FIG. 8 is a flowchart showing an algorithm, indicated generally by the reference numeral 80, in accordance with an example embodiment. The algorithm 80 starts with the relevant user device in an ACT or READ state.

An ACT/READ device is an RRC connected device most of the time. It can activate and/or read a passive device, and can forward information between FSDs and to the SCU. If the SCU is unavailable, the ACT/READ device may store data, such as readings. When an FSD device is an ACT/READ device, the device monitors for internal or external triggers in addition to performing the task of activating or reading.

The algorithm 80 starts at operation 81, where a determination is made regarding whether an external request/trigger includes an explicit FSD change request. The request may be received from a session control unit. If an explicit request is received, then the algorithm moves to operation 82, where the device state is changed as requested. Otherwise, the algorithm moves to operation 83. As noted above, an explicit request of this nature may have the highest priority.

At operation 83, a determination is made regarding whether an FSD timer has lapsed. If so, the algorithm moves to operation 85 (as discussed below); otherwise the algorithm moves to operation 84.

At operation 84, a determination is made regarding whether traffic needs indicate that a higher priority traffic request is required. If so, the algorithm moves to operation 85; otherwise the algorithm moves to operation 86.

At operation 85, the FSD function is released (so that the device no longer acts as either an activation or a read device). This "self-demotion" is broadcast to peer devices.

At operation 86, the mobility regime of the device is monitored. If a high mobility regime is detected, then the algorithm 80 moves to operation 87, where the device is demoted (either from the ACT state to the ACTE state or from the READ state to the READE state). The self-demotion is broadcast as part of the operation 87.

If no demotion occurs, the algorithm returns to the operation 81 described above.

Thus, a device in the ACT or READ state may periodically evaluate if one or a number of triggers has been received (and different trigger types may be prioritised). This simple scheme seeks to ensure that a control unit (e.g. the SCU described above) has decision priority, but that out of coverage FSDs can still operate independently.

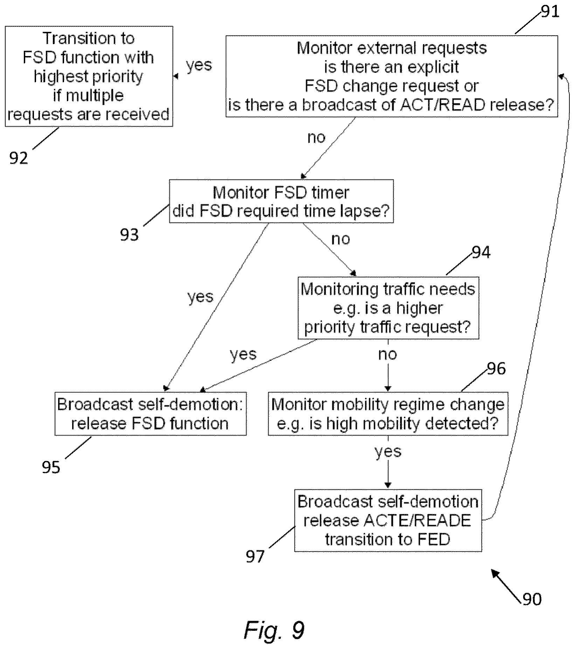

FIG. 9 is a flowchart showing an algorithm, indicated generally by the reference numeral 90, in accordance with an example embodiment. The algorithm 90 starts with the relevant user device in an ACTE or READE state.

An ACTE/READE device is an RRC connected device most of the time. Such a device is available to be promoted to an ACT or READ device is response to a suitable trigger and can forward information between FSDs and to the SCU. If the SCU is unavailable, the ACTE/READE device can also store data, such as readings. When an FSD device is an ACTE/READE device, the device monitors for internal or external triggers.

The algorithm 90 starts at operation 91, where external requests are monitored. If am explicit FSD change request is received, or a broadcast of ACT/READ release by a peer device is received, then the algorithm moves to operation 92. Otherwise, the algorithm moves to operation 93. At operation 92, the received external request is implemented. Note that if multiple triggers/requests are received, then the FSD function with the highest priority is implemented.

At operation 93, a determination is made regarding whether an FSD timer has lapsed. If so, the algorithm moves to operation 95 (as discussed below); otherwise the algorithm moves to operation 94.

At operation 94, a determination is made regarding whether traffic needs indicate that a higher priority traffic request is required. If so, the algorithm moves to operation 95; otherwise the algorithm moves to operation 96.

At operation 95, the FSD function is released (so that the device no longer acts as either an activation-eligible or a read-eligible device). This "self-demotion" is broadcast to peer devices.

At operation 96, the mobility regime of the device is monitored. If a high mobility regime is detected, then the algorithm 90 moves to operation 97, where the device is demoted to the FED state. The self-demotion is broadcast as part of the operation 97.

If no demotion occurs, the algorithm returns to the operation 91 described above.

Thus, a device in the ACTE or READE states may periodically evaluate if one or a number of triggers has been received. This simple scheme seeks to ensure that a control unit (e.g. the SCU described above) has decision priority, but that out of coverage FSDs can still operate independently. Note that is some example embodiments, once demoted to FED, an FSD device can only receive promotions from the SCU but cannot trigger self-promotion.

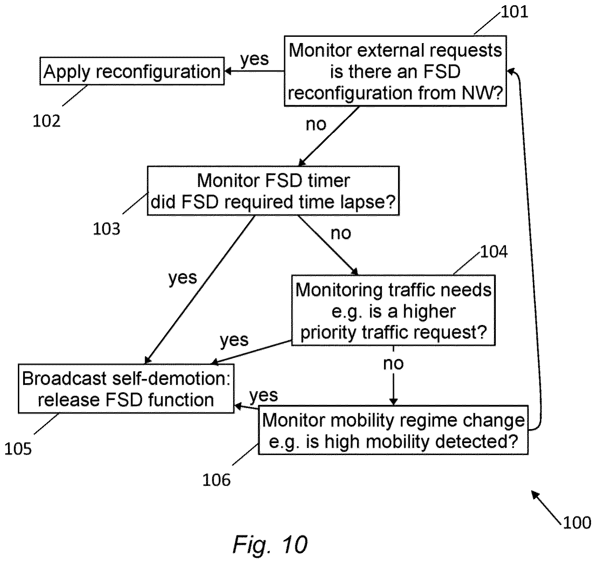

FIG. 10 is a flowchart showing an algorithm, indicated generally by the reference numeral 100, in accordance with an example embodiment. The algorithm 100 starts with the relevant user device in an FED state.

The algorithm 100 starts at operation 101, where external requests are monitored. If am explicit FSD reconfiguration request is received from a network, then the algorithm moves to operation 102, where the reconfiguration is applied. Otherwise, the algorithm moves to operation 103.

At operation 103, a determination is made regarding whether an FSD timer has lapsed. If so, the algorithm moves to operation 105 (as discussed below); otherwise the algorithm moves to operation 104.

At operation 104, a determination is made regarding whether traffic needs indicate that a higher priority traffic request is required. If so, the algorithm moves to operation 105; otherwise the algorithm moves to operation 106.

At operation 105, the FSD function is released (so that the device no longer acts as either an FSD eligible device). This "self-demotion" is broadcast to peer devices.

At operation 106, the mobility regime of the device is monitored. If a high mobility regime is detected, then the algorithm 100 moves to operation 105, where the FSD function is released (as discussed above). Otherwise, the algorithm returns to the operation 101.

Thus, a FED device can self-demote when either a timer expires, when it has to serve higher traffic, or when its mobility regime has changed.

The embodiments described herein seek to provide clear device role definitions based, for example, on location, capability, availability, possibility to organize the passive device system centrally via a network node, possibility to self-organize the passive device when out of coverage or in high network load, etc.. In some example embodiments, independent, self-promotion/demotion allows for networks to be self-healing/self-organising and may allow for more robust communications.

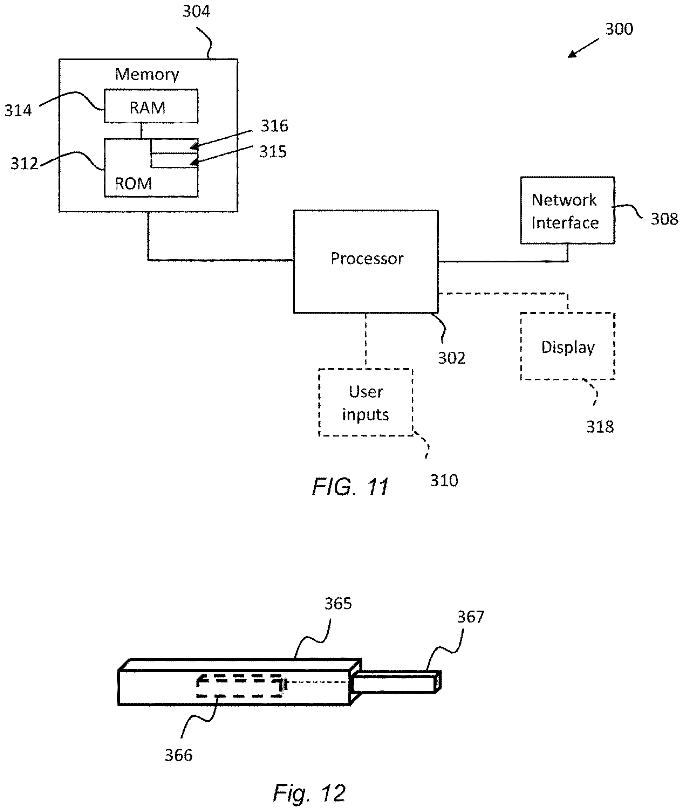

For completeness, FIG. 11 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms and sequences 20, 50, 60, 70, 80, 90 and 100 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 12 shows a tangible media, in the form of a removable memory unit 365, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. Of course, other forms of tangible storage media may be used, as will be readily apparent to those of ordinary skilled in the art. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and sequences of Figures 2 and 5 to 10 are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. A first device comprising:
means for receiving configuration information from a control unit, wherein the configuration information comprises a configured state of the first device and a duration for serving as one of a plurality of peer devices, wherein each of the peer devices has one of a plurality of states, wherein said plurality of states comprise an activation state in which the respective device is configured to transmit an activation signal for activating a second device, a reading state in which the respective device is configured to detect a transmission from said second device in response to said activation signal, an activation eligible state in which the respective device is available to be promoted to the activation state, and a reading eligible state in which the respective device is available to be promoted to the reading state;
means for setting the state of the first device to the configured state in response to reception of configuration information from said control unit;
means for monitoring one or more triggers;
means for controlling a change in the state of the first device in response to activation of one or more monitored triggers; and
means for communicating any change of state of the first device to one or more of said peer devices.

2. A first device as claimed in claim 1, wherein said one or more triggers include an explicit request defining a new required state for the first device.

3. A first device as claimed in claim 2, wherein the means for controlling the change in the state of the first device prioritises explicit requests over other triggers.

4. A first device as claimed in any one of the preceding claims, wherein said one or more triggers comprise an indication from one of the peer devices that the respective peer device is being demoted from an activation state to an activation eligible state, in response to which the means for controlling the change in the state of the first device is configured to promote the first device to the activation state in the event that the first device is in the activation eligible state.

5. A first device as claimed in any one of the preceding claims, wherein said one or more triggers comprise an indication from one of the peer devices that the respective peer device is being demoted from a reading state to a reading eligible state, in response to which the means for controlling the change in the state of the first device is configured to promote the first device to the reading state in the event that the first device is in the reading eligible state.

6. A first device as claimed in any one of the preceding claims, wherein said one or more triggers include a requirement for the first device to perform a higher priority task, in response to which the first device ceases to serve as one of said plurality of peer devices.

7. A first device as claimed in any one of the preceding claims, wherein said one or more triggers include the expiry of the duration for serving as one of said plurality of peer devices, in response to which the first device ceases to serve as one of said plurality of peer devices.

8. A first device as claimed in any one of the preceding claims, wherein said one more triggers include a mobility regime change, in response to which the means for controlling the change in the state of the first device is configured to:
change the state to the activation eligible state in the event that the first device is in the activation state; and
change the state to the reading eligible state in the event that the first device is in the reading state.

9. A first device as claimed in any one of the preceding claims, wherein said one or more triggers include detecting that an activation signal is being transmitted by a different one of said peer devices, in response to which the means for controlling the change in the state of the first device is configured to:
promote the first device to the reading state in the event that the first device is in the reading eligible state.

10. A first device as claimed in any one of the preceding claims, wherein the configuration information comprises a list of second devices to be served by the first device.

11. A first device as claimed in any one of the preceding claims, wherein said plurality of states comprise a relay state.

12. A first device as claimed in claim 11, wherein said one more triggers include a mobility regime change, in response to which the means for controlling the change in the state of the first device is configured to change the state to the relay state in the event that the first device is in the activation ready state or the reading ready state.

13. A first device as claimed in any one of the preceding claims, wherein the first device is a user equipment of a mobile communication system.

14. A method comprising:
receiving, at a first device, configuration information from a control unit, wherein the configuration information comprises a configured state of the first device and a duration for serving as one of a plurality of peer devices, wherein each of the peer devices has one of a plurality of states, wherein said plurality of states comprise an activation state in which the respective device is configured to transmit an activation signal for activating a second device, a reading state in which the respective device is configured to detect a transmission from said second device in response to said activation signal, an activation eligible state in which the respective device is available to be promoted to the activation state, and a reading eligible state in which the respective device is available to be promoted to the reading state;
setting the state of the first device to the configured state in response to reception of configuration information from said control unit;
monitoring one or more triggers;
controlling a change in the state of the first device in response to activation of one or more monitored triggers; and
communicating any change of state of the first device to one or more of said peer devices.

15. A computer program comprising instructions which, when executed by a first device, cause the first device to:
receive configuration information from a control unit, wherein the configuration information comprises a configured state of the first device and a duration for serving as one of a plurality of peer devices, wherein each of the peer devices has one of a plurality of states, wherein said plurality of states comprise an activation state in which the respective device is configured to transmit an activation signal for activating a second device, a reading state in which the respective device is configured to detect a transmission from said second device in response to said activation signal, an activation eligible state in which the respective device is available to be promoted to the activation state, and a reading eligible state in which the respective device is available to be promoted to the reading state;
set the state of the first device to the configured state in response to reception of configuration information from said control unit;
monitor one or more triggers;
control a change in the state of the first device in response to activation of one or more monitored triggers; and
communicate any change of state of the first device to one or more of said peer devices.
